# EUROPÄISCHE PATENTSCHRIFT

(11) **EP 1 611 376 B1**
(45) Veröffentlichungstag und Bekanntmachung des Hinweises auf die Patenterteilung: **29.08.2007**
(21) Anmeldenummer: 04725287.9
(22) Anmeldetag: 02.04.2004
(51) Int. Cl.: F16H 59/02

(54) **SHIFT BY WIRE - SCHALTUNG MIT P-POSITION**
SHIFT-BY-WIRE GEARSHIFT MECHANISM COMPRISING A P-POSITION
CHANGEMENT DE VITESSES DU TYPE SHIFT-BY-WIRE AVEC POSITION P

(30) Priorität: 04.04.2003 DE 10315643
(43) Veröffentlichungstag der Anmeldung: 04.01.2006
(73) Patentinhaber: ZF Lemförder Metallwaren AG, 49448 Lemförde (DE)
(72) Erfinder: KLIEMANNEL, Wolfgang, 49448 Lemförde (DE); MEYER, Jörg, 49419 Wagenfeld (DE)
(86) Internationale Anmeldenummer: PCT/DE2004/000714
(87) Internationale Veröffentlichungsnummer: WO 2004/089677

(56) Entgegenhaltungen:
- DE-A- 3 735 184
- DE-A- 10 144 896
- DE-A- 10 144 901
- DE-A- 19 728 064
- DE-A- 19 756 034
- DE-A- 19 951 374
- PATENT ABSTRACTS OF JAPAN Bd. 1998, Nr. 05, 30. April 1998 (1998-04-30) & JP 10 016595 A (MAZDA MOTOR CORP), 20. Januar 1998 (1998-01-20)
- PATENT ABSTRACTS OF JAPAN Bd. 1997, Nr. 10, 31. Oktober 1997 (1997-10-31) & JP 09 170652 A (SUZUKI MOTOR CORP), 30. Juni 1997 (1997-06-30)

## Beschreibung

Die Erfindung betrifft eine Schaltvorrichtung zur kraftlosen Übertragung von Schaltbefehlen an ein Automatikgetriebe eines Kraftfahrzeuges, entsprechend dem Oberbegriff des Anspruchs 1 und wie aus der DE 3 735 184 A bekannt ist. Dieses Dokument zeigt eine Detektionsvorrichtung die für mindestens eine des Schaltpositionen des Schalthebels einen elektrischen Schalter aufweist.

Eine ähnliche Schaltvorrichtung ist beispielsweise aus der Patentanmeldung DE 197 56 034 A1 der Anmelderin bekannt. Diese Schrift offenbart eine Schaltvorrichtung mit einem in einer Schaltachse schwenkbar gelagerten Schalthebel, der in einer Schaltgasse zwischen zwei Positionen vor und zurück zu bewegen ist und in diesen endständigen Schaltpositionen jeweils eine Detektionsvorrichtung aufweist, durch die jeweils ein Schaltbefehl an das mit der Schaltvorrichtung verbundene Automatikgetriebe übertragen wird. Es wird also durch eine solche Schaltvorrichtung ein sogenanntes sequentielles Schalten ermöglicht, das heißt durch das Vor- oder Zurücktippen des Schalthebels lässt sich die Gangstufe des Automatikgetriebes jeweils um einen Gang auf- oder abschalten.

Ein Nachteil solcher "Tipp-Schaltungen" liegt darin, dass zum Erreichen einer bestimmten Schaltsituation, zum Beispiel der "P"-Position, gegebenenfalls mehrere Schaltvorgänge notwendig sind und zumindest optisch auch der tatsächlich eingelegte Gang überwacht werden muss, um beim Durchschalten in der jeweils gewünschten Position, vorzugsweise in der "P"-Position, anzugelangen.

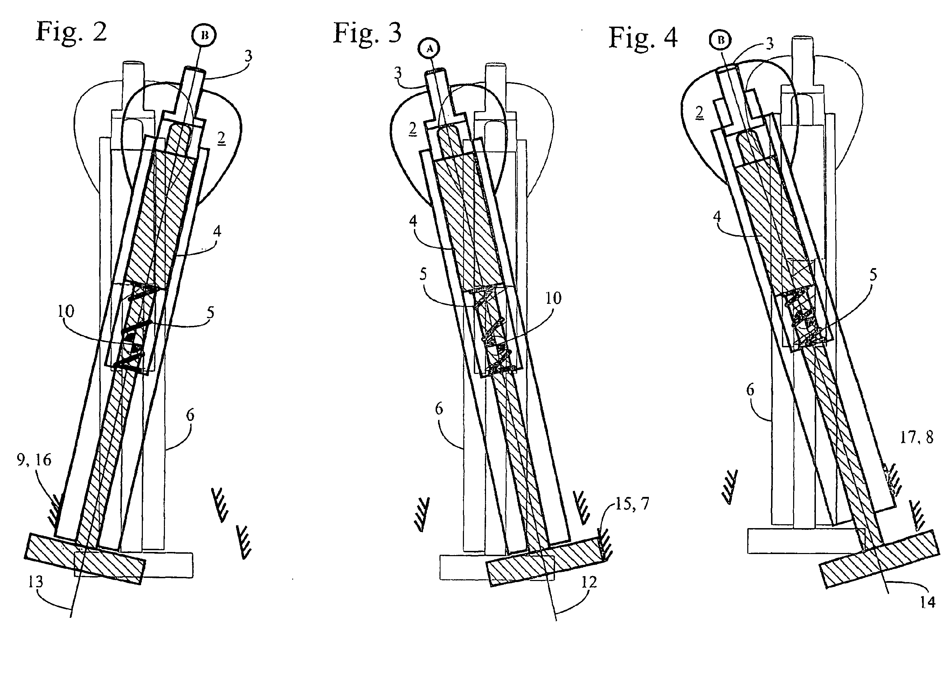

Eine andere ähnliche Schaltvorrichtung ist in der Patentanmeldung DE 199 16 924 A1 beschrieben. Diese Offenlegungsschrift zeigt eine monostabile "Shift by Wire-Schaltung", bei der durch Antippen des Schalthebels verschiedene Getriebestellungen angewählt werden können, wobei durch Überdrücken über die erste Position hinaus eine weitere Position angewählt werden kann. In der Figur 3 dieser Anmeldung ist gezeigt, dass zum Anwählen der Parkposition, die der Stellung 2 entspricht, ein Druckpunkt in der Stellung 1 überbrückt werden muss. Dies birgt den Nachteil in sich, dass beispielsweise beim Anwählen der Position "R" durch Überreißen aus Versehen die Stellung "2" erreicht wird und damit die "P"-Position angewählt werden kann.

Es ist daher Aufgabe der Erfindung eine Schaltungsvorrichtung der eingangs erwähnten Art darzustellen, die ein unbeabsichtigtes Anwählen der "P"-Position durch ein Überreißen der ersten Tipp-Position sicher vermeidet, wobei es auch möglich sein sollte, eine bestimmte Schaltsituation und Getriebestellung zu erreichen, ohne zuvor andere Getriebestellungen durchschalten zu müssen.

Diese Aufgabe der Erfindung wird durch eine Schaltvorrichtung mit den Merkmalen des Patentanspruches 1 gelöst. Besondere Ausbildungen der Erfindung sind in den Unteransprüchen angegeben.

Demgemäss schlagen die Erfinder vor, eine an sich bekannte Schaltvorrichtung zur kraftlosen Übertragung von Schaltbefehlen an ein Automatikgetriebe eines Kraftfahrzeuges weiterzubilden. Diese bekannte Schaltvorrichtung weist ein Gehäuse auf, in dem die Schaltvorrichtung gelagert ist, einen entlang einer Schaltgasse schwenkbar gelagerten Schalthebel und einen ersten und einen zweiten Schaltanschlag für den Schalthebel, welche je eine Schaltposition des Schalthebels bestimmen, wobei der Schaltanschlag jeweils durch einen gehaüseseitigen Anschlag und einen schalthebelseitigen Anschlag gebildet werden. Weiterhin weist die Schaltvorrichtung je Anschlag eine Detektionsvorrichtung für diese zwei Schaltpositionen auf, wobei zwischen diesen Schaltpositionen eine Ruheposition angeordnet ist, in welcher der Schalthebel von einer ausgelenkten Schaltposition, durch eine Rückstellkraft getrieben, von selbst einschwenkt. Die erfindungsgemäße Fortbildung dieser bekannten Schaltvorrichtung sieht vor, dass der, einer der Schaltpositionen zugeordnete und schalthebelseitige Anschlag mit einer mechanischen Betätigungsvorrichtung am Schalthebel verbunden ist, die den Anschlag derart bewegen kann, dass der Schalthebel über diese Schaltposition hinaus zu einem weiteren gehäuseseitigen Anschlag ausgelenkt werden kann.

Durch diese Ausführung steht nun eine Schaltgasse zur Verfügung, in der zwei endständige Schaltpositionen durch einfaches Antippen des Schalthebels in gegengesetzter Richtungen erreicht werden kann, wobei zum Erreichen einer weiteren Schaltposition das schalthebelseitige Anschlagselement ausgerückt werden kann, um eine weitere definierte Schaltposition zu erreichen.

In einer besonderen Ausführung kann die Betätigungsvorrichtung, durch welche der schalthebelseitige Anschlag ausgerückt werden kann, eine im Schalthebel verlaufende Druck/Zugstange aufweisen, an der gegebenenfalls ein endständig angeordnetes schalthebelseitiges Anschlagselement mit einem Anschlag oder ein seitlich angebrachter Zapfen, der als schalthebelseitiges Anschlagselement wirkt, vorgesehen ist.

Eine solche Betätigungsvorrichtung kann weiterhin ein Federelement aufweisen, welches die Druck/Zugstange unbetätigt relativ zum Schalthebel in eine obere Lage drückt, so dass kein aktives Rückstellen der Betätigungsvorrichtung durch den Fahrer notwendig wird. Beispielsweise kann ein solches Federelement eine Spiralfeder sein, welche die im Schalthebel verlaufende Druck/Zugstange umschließt und sich einerseits am Schalthebel und andererseits an der Druck/Zugstange abstützt.

Die Betätigungsvorrichtung kann des weiteren, in einer besonderen Ausführungsform, eine Taste in einem Schaltknauf am Schalthebel aufweisen, wobei die Taste einerseits in Längsrichtung des Schalthebels verschiebbar gelagert sein kann oder auch über eine entsprechende Umlenkung durch eine seitlich angebracht Taste eine Längsverschiebung der Druck/Zugstange bewirkt werden kann. Derartige Ausführungen sind im Stand der Technik in verschiedenster Weise bekannt. Beispielsweise kann auch der Schalthebel selbst in seiner Längsrichtung federbelastet verschoben werden, so dass hierdurch ein Ausrücken des schalthebelseitigen Anschlags bewirkt wird.

Als Detektionsvorrichtung für die mindestens eine Schaltpositionen des Schalthebels können beispielsweise ein Hall-Sensor, ein optischer Sensor oder auch ein elektrischer Schalter verwendet werden. Auch Kombinationen zwischen den einzelnen Sensoren und Schaltern sind hierbei möglich.

Außerdem kann erfindungsgemäß auch eine Detektionsvorrichtung oder zumindest ein Sensor für die Detektionsvorrichtung für die Ruheposition des Schalthebels vorgesehen sein. Hierdurch lässt sich dann auch zweifelsfrei bestimmen, dass der Schalthebel sich genau in dieser nicht ausgelenkten Position befindet.

Zur Erzeugung der Rückstellkraft des Schalthebels kann in einer besonderen Ausführung eine federbelastete Rolle vorgesehen sein, die am Schalthebel angebracht ist und über eine entsprechend ausgebildete gehäusefeste Kurvatur läuft, so dass die Federlast an der Rolle zur Ruheposition sich jeweils reduziert. Durch die Steigung der Kurvatur gegenüber dem Bewegungsradius des Schalthebels lässt sich hier eine entsprechend ergonomische Ausführung der aufzuwendenden Druck- und Zugkräfte bei der Bestätigung des Schalthebels erreichen.

Weitere Merkmale und Vorteile der Erfindung ergeben sich aus den Unteransprüchen und der nachfolgenden Beschreibung eines bevorzugten Ausführungsbeispieles unter Bezugnahme auf die Zeichnungen. Es zeigen:
- Figur 1:: Schalthebel der Schaltvorrichtung mit Anschlägen im Längsschnitt ;
- Figur 2:: Schalthebel in Stellung Tipp-B ;
- Figur 3:: Schalthebel in Stellung Tipp-A ;
- Figur 4 :: Schalthebel in P-Position.

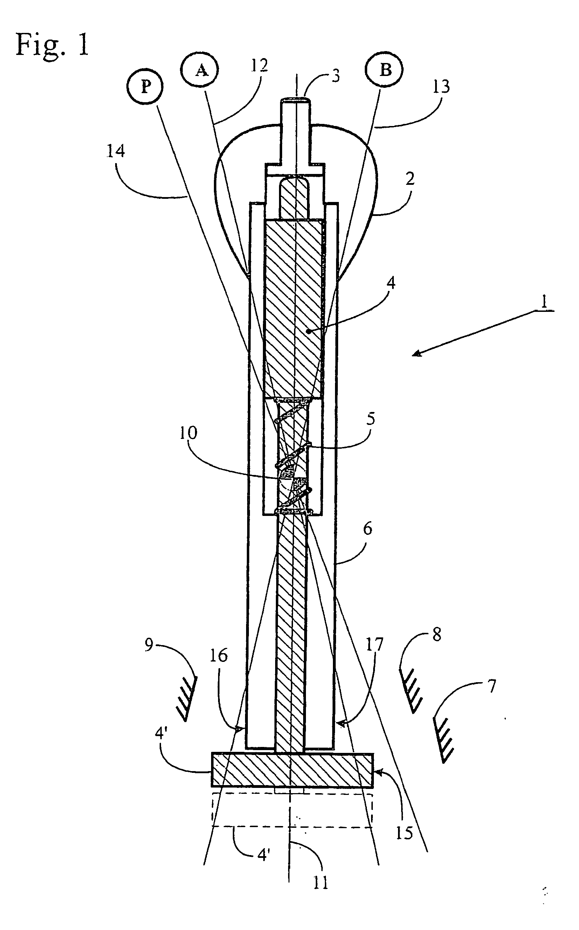

Die Figur 1 zeigt eine erfindungsgemäße Ausführungsform einer Schaltvorrichtung mit dem Schalthebel 1 und den symbolisch dargestellten gehäuseseitigen Anschlägen 7 bis 9, wobei zur besseren Übersicht auf eine Darstellung des Gehäuses und der Lagerung des Schalthebels selbst im Gehäuse verzichtet wurde.

Der Schalthebel 1 besteht im wesentlichen aus einer Hohlstange 6, welche in einer Schwenkachse 10 schwenkbar gelagert ist. In der Hohlstange 6 befindet sich eine in Längsrichtung verschiebbare Druckstange 4, die mit Hilfe einer Spiralfeder 5 gegenüber der Hohlstange 6 federnd abgestüzt ist. Am oberen Ende der Druckstange 4 ist ein Schaltknauf 2 aufgesetzt, der über einen Druckknopf 3 verfügt, mit dessen Hilfe die federnd gelagerte Druckstange 4 relativ zur Hohlstange 6 durch manuelle Betätigung verschiebbar ist. Die Druckstange 4 verfügt an ihrem unteren Ende über eine Anschlagsplatte 4', die auf der rechten Seite einen schalthebelseitigen Anschlag 15 bildet. Weitere schalthebelseitige Anschläge 16 und 17 werden durch die Außenseite der Hohlstange 6 erzeugt. Die oben genannten schalthebelseitigen Anschläge wirken jeweils mit den gehäuseseitigen Anschlägen 7, 8 und 9 zusammen.

Befindet sich die Druckstange 4 in der hier dargestellten oberen Position, so werden gehäuseseitig die beiden Anschläge 7 und 9 wirksam, so dass der Schalthebel von der hier dargestellten Ruheposition 11 vor oder zurück ausgeschwenkt werden kann, so dass die beiden Stellungen 12 und 13 erreicht werden können.

Wird die Druckstange 4 mit Hilfe des Druckknopfes 3 nach unten bewegt, so dass auch die Anschlagplatte 4' sich - wie hier gestrichelt dargestellt - nach unten bewegt, so bewirkt dies ein Ausrücken des Anschlags 15 relativ zum zugehörigen gehäuseseitigen Anschlag 7, so dass diese beiden Anschläge nicht miteinander wirken können, und der Schalthebel über die Stellung 12 hinaus zur Stellung 14 bewegt werden kann. In dieser Stellung 14 wirkt der gehäuseseitige Anschlag 8 mit dem schalthebelseitigen Anschlag 17 zusammen und der Schalthebel erreicht in dieser Stellung seine maximal mögliche Auslenkung.

Den einzelnen Stellungen 12, 13 und 14 sind an sich allgemein bekannte Detektionsvorrichtungen, beispielsweise elektrische Schalter, Hall-Sensoren oder optische Sensoren, zugeordnet, die hier nicht weiter dargestellt sind. Beispielsweise können auch die gehäuseseitigen Anschläge 7, 8 und 9 als isolierte elektrische Kontakte ausgeführt werden, so dass eine Berührung mit dem Schalthebel 1 jeweils einen der jeweiligen Schaltposition zuordenbaren elektrischen Impuls auslöst. Ergänzend kann auch ein weiterer Sensor vorgesehen werden, mit dem die Stellung 11, also die Ruheposition zwischen Tipp-A und Tipp-B, detektiert wird. Mit Hilfe solch eines zusätzlichen Sensors kann beispielsweise über eine entsprechende Logikverifikation das Betätigen des Druckknopfes nur dann frei gegeben werden, wenn sich der Schalthebel in dieser Position befindet.

Die Figuren 2 bis 4 zeigen nochmals den Schalthebel aus Figur 1 in drei verschiedenen Schaltpositionen, wobei im Hintergrund dünn gezeichnet der Schalthebel jeweils in der Neutralposition dargestellt ist.

In der Figur 2 ist der Schalthebel 1 um seine Schwenkachse 10 in die Stellung 13 ausgelenkt dargestellt, wobei der schalthebelseitige Anschlag 16 mit dem gehäuseseitigen Anschlag 9 zusammenwirkt. Dies kann beispielsweise dem Heraufschalten des Getriebes durch einen "Tipp B"-Befehl oder dem Befehl zur Einlegung der Fahrstufe "D" entsprechen.

In der Figur 3 ist der Schalthebel 1 in die entgegengesetzte Richtung zu Figur 2 ausgelenkt, wobei die Druckstange 4 sich in einer Neutralposition befindet, so dass der gehäuseseitig Anschlag 7 mit dem schalthebelseitigen Anschlag 15 zusammenwirkt, so dass die Stellung 12 des Schalthebels erreicht wird und damit der "Tipp A"-Befehl zum Herunterschalten oder der Befehl zum Einlegen der Fahrstufe "R" an das Automatikgetriebe weitergegeben wird.

Wird nun zusätzlich der Druckknopf 3 durch den Fahrer betätigt, so dass die Druckstange 4 nach unten ausrückt, kann der Schalthebel 1, wie in Figur 4 gezeigt, über die Stellung 12 hinaus zur Stellung 14 bewegt werden. In dieser Stellung werden der gehäuseseitige Anschlag 8 und der schalthebelseitige Anschlag 17 wirksam, wobei diese Stellung 14 den Befehl zum Einlegen der Fahrstufe "P", also der Parkverriegelung, an das Automatikgetriebe weitergibt.

Die oben genannten Stellungen Tipp-A 12 und Tipp-B 13 können also beispielsweise bei einem sequentiell gesteuerten Automatikgetriebe ein Herauf- und ein Herunterschalten bewirken, während sie bei der Verwendung eines vollautomatisch funktionierenden Getriebes die Einlegung der Fahrstufen "R" und "D" bewirken. Die Stellung 14 entspricht dementsprechend der Einlegung der Parkposition "P".

Des weiteren kann bei der elektronischen Verarbeitung der von der Schaltvorrichtung ausgegebenen Befehle eine Logikverifikation durchgeführt werden, so dass auch die Erzeugung eines Schaltbefehls in der Schalthebelstellung 14 - entsprechend der "P"-Position eines Schaltgetriebes - nur dann durchgeführt oder ausgeführt wird, wenn die Fahrsituation des Fahrzeuges dieses erlaubt.

Insgesamt wird also mit dieser Erfindung eine Schaltvorrichtung zur kraftlosen Übertragung von Schaltbefehlen an ein Automatikgetriebe oder auch sequentiell zu schaltendes Automatikgetriebe eines Kraftfahrzeuges dargestellt, welches es ermöglicht, bestimmte Schaltsituationen oder Getriebestellungen, hier insbesondere die "P"-Position zu erreichen, ohne zuvor andere Getriebestellungen durchschalten zu müssen, indem ein schalthebelseitiger Anschlag einer Schaltposition mit einer mechanischen Betätigungsvorrichtung am Schalthebel verbunden ist, durch deren Betätigung ausgerückt und der Schalthebel über diese Schaltposition hinaus zu einem weiteren Schaltanschlag gelenkt werden kann.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen. Ebenso liegt es im Rahmen der Erfindung eine mechanische Umkehr der Funktionen der einzelnen mechanischen Elemente der Erfindung zu bewirken.

### BEZUGSZEICHENLISTE:

- 1: Schalthebel
- 2: Knauf
- 3: Druckknopf
- 4: Druckstange
- 4': Anschlagsplatte
- 5: Spiralfeder
- 6: Hohlstange
- 7: Gehäuseseitiger Anschlag / Tipp-A
- 8: Gehäuseseitiger Anschlag / P-Position
- 9: Gehäuseseitiger Anschlag / Tipp-B
- 10: Schwenkachse
- 11: Ruheposition
- 12: Stellung Tipp-A
- 13: Stellung Tipp-B
- 14: Stellung P-Position
- 15: Schalthebelseitiger Anschlag / Tipp-A
- 16: Schalthebelseitiger Anschlag / Tipp-B
- 17: Schalthebelseitiger Anschlag / P-Position

## Patentansprüche

1. Schaltvorrichtung zur kraftlosen Übertragung von Schaltbefehlen an ein Automatikgetriebe eines Kraftfahrzeuges, mit:
- einem Gehäuse, in dem die Schaltvorrichtung gelagert ist,
- einem, entlang einer Schaltgasse schwenkbar gelagerten, Schalthebel (1), und
- einem ersten und einem zweiten Schaltanschlag (7, 15; 9, 16) für den Schalthebel (1), welche je eine Schaltposition (12, 13) des Schalthebels (1) bestimmen, jeweils gebildet durch
- einen gehäuseseitigen Anschlag (7, 9) und
- einen schalthebelseitigen Anschlag (15, 16),
- weiterhin je Schaltanschlag (7, 15; 9, 16) mit einer Detektionsvorrichtung für diese zwei Schaltpositionen (12, 13), wobei
- zwischen diesen Schaltpositionen (A, B) eine Ruheposition (11) angeordnet ist, in welche der Schalthebel (1) von einer ausgelenkten Schaltposition (12, 13), durch eine Rückstellkraft getrieben, von selbst einschwenkt,
**dadurch gekennzeichnet, dass**
- der, einer der Schaltpositionen (12) zugeordnete und schalthebelseitige, Anschlag (15) mit einer mechanischen Betätigungsvorrichtung (3, 4) am Schalthebel verbunden ist, die den Anschlag (15) senkrecht zur Schwenkachse des Schalthebels (1) derart bewegen kann, dass der Schalthebel (1) entlang der Schaltgasse über diese Schaltposition (12) hinaus zu einem weiteren gehäuseseitigen Anschlag (8) ausgelenkt werden kann und dass
- die Detektionsvorrichtung für mindestens eine der Schaltpositionen des Schalthebels (1) einen Hall-Sensor, einen optischen Sensor oder einen elektrischen Schalter aufweist.

2. Schaltvorrichtung gemäß dem voranstehenden Anspruch 1, **dadurch gekennzeichnet, dass** die Betätigungsvorrichtung eine im Schalthebel (1) verlaufende Druck/Zugstange (4) aufweist.

3. Schaltvorrichtung gemäß dem voranstehenden Anspruch 2, **dadurch gekennzeichnet, dass** die im Schalthebel (1) verlaufende Druck/Zugstange (4) ein endständig angeordnetes schalthebelseitiges Anschlagselement (4') aufweist.

4. Schaltvorrichtung gemäß dem voranstehenden Anspruch 2, **dadurch gekennzeichnet, dass** die im Schalthebel (1) verlaufende Druck/Zugstange (4) einen Zapfen als schalthebelseitigen Anschlag aufweist.

5. Schaltvorrichtung gemäß einem der voranstehenden Ansprüche 2 bis 4, **dadurch gekennzeichnet, dass** die Betätigungsvorrichtung ein Federelement (5) aufweist, welches die Druck/Zugstange (4) unbetätigt relativ zum Schalthebel (1) in eine obere Lage drückt.

6. Schaltvorrichtung gemäß dem voranstehenden Anspruch 5, **dadurch gekennzeichnet, dass** das Federelement eine Spiralfeder (5) ist, welche die, im Schalthebel (1) verlaufende Druck/Zugstange (4) umschließt und sich einerseits am Schalthebel(1) und andererseits an der Druck/Zugstange (4) abstützt.

7. Schaltvorrichtung gemäß einem der voranstehenden Ansprüche 2 bis 6, **dadurch gekennzeichnet, dass** die Betätigungsvorrichtung eine Taste (3) in einem Schaltknauf (2) am Schalthebel (1) aufweist.

8. Schaltvorrichtung gemäß dem voranstehenden Anspruch 7, **dadurch gekennzeichnet, dass** die Taste (3) in Längsrichtung des Schalthebels (1) verschiebbar gelagert ist.

9. Schaltvorrichtung gemäß einem der voranstehenden Ansprüche 1 bis 8, **dadurch gekennzeichnet, dass** ein Sensor zur Detektion des Schalthebels (1) in seiner Ruheposition (11) vorgesehen ist.

10. Schaltvorrichtung gemäß einem der voranstehenden Ansprüche 1 bis 12, **dadurch gekennzeichnet, dass** die Rückstellkraft des Schalthebels (1) durch eine federbelastete Rolle, die am Schalthebel (1) angebracht ist und über eine gehäusefeste Kurvatur läuft, erzeugt wird, wobei sich die Federlast an der Rolle zur Ruheposition (11) hin reduziert.

11. Schaltvorrichtung nach einem der vorangegangenen Ansprüche, **dadurch gekennzeichnet, dass** der bewegbare und schalthebelseitige Anschlag (15) mittels einer mechanischen Betätigungsvorrichtung (3, 4) senkrecht zur Schwenkachse des Schalthebels (1) bewegt werden kann.

12. Verwendung einer Schaltvorrichtung nach Anspruch 11 zum einlegen der Parkverriegelung des Automatikgetriebes indem der schalthebelseitige Anschlag (15) mittels der mechanischen Betätigungsvorrichtung (3, 4) senkrecht Schwenkachse des Schalthebels (1) bewegt wird und dann ein anderer schalthebelseitiger Anschlag (16) gegen den weiteren gehäuseseitigen Anschlag (8) durch Bewegen des Schalthebels (1) entlang der Schaltgasse zur Anlage gebracht wird.

## Claims

1. Gearshift mechanism for transmitting gearshift commands to an automatic transmission of a motor vehicle without force, comprising:
- a housing in which the gearshift mechanism is mounted,
- a gearshift lever (1) mounted so as to be pivotable along a shift gate, and
- a first and a second shift stop (7, 15; 9, 16) for the gearshift lever (1), each of which defines a gearshift position (12, 13) of the gearshift lever (1), respectively comprising
- a stop (7, 9) at the housing end and
- a stop (15, 16) at the gearshift lever end,
- each gearshift stop (7, 15; 9, 16) being provided with a detection device for these two gearshift positions (12, 13), and
- a non-operating position (11) is disposed between these gearshift positions (A, B), into which the gearshift lever (1) is pivoted from an outwardly pivoted gearshift position (12, 13) of its own accord by means of a return force,
**characterised in that**
- the stop (15) assigned to one of the gearshift positions (12) and at the gearshift lever end is connected to a mechanical actuator device (3, 4) on the gearshift lever which is able to move the stop (15) perpendicular to the pivot axis of the gearshift lever (1) so that the gearshift lever (1) can be pivoted along the shift gate beyond this gearshift position (12) to another stop (8) at the housing end and
- the detection device has a Hall-effect sensor, an optical sensor or an electric switch for at least one of the gearshift positions of the gearshift lever (1).

2. Gearshift mechanism as claimed in the preceding claim 1, **characterised in that** the actuator device has a compression/tension rod (4) extending through the gearshift lever (1).

3. Gearshift mechanism as claimed in the preceding claim 2, **characterised in that** the compression/tension rod (4) extending through the gearshift lever (1) has a separately disposed stop element (4') at the gearshift lever end.

4. Gearshift mechanism as claimed in the preceding claim 2, **characterised in that** the compression/tension rod (4) extending through the gearshift lever (1) has a pin serving as the stop at the gearshift lever end.

5. Gearshift mechanism as claimed in one of the preceding claims 2 to 4, **characterised in that** the actuator device has a spring element (5) which forces the compression/tension rod (4) into a top position relative to the gearshift lever (1) when not actuated.

6. Gearshift mechanism as claimed in the preceding claim 5, **characterised in that** the spring element is a helical spring (5), which surrounds the compression/tension rod (4) extending through the gearshift lever (1) and is supported on the gearshift lever (1) at one end and on the compression/tension rod (4) at the other end.

7. Gearshift mechanism as claimed in one of the preceding claims 2 to 6, **characterised in that** the actuator device has a push-button (3) in a shift knob (2) on the gearshift lever (1).

8. Gearshift mechanism as claimed in the preceding claim 7, **characterised in that** the push-button (3) is mounted so that it can be moved in the longitudinal direction of the gearshift lever (1).

9. Gearshift mechanism as claimed in one of the preceding claims 1 to 8, **characterised in that** a sensor is provided as a means of detecting the gearshift lever (1) in its non-operating position (11).

10. Gearshift mechanism as claimed in one of the preceding claims 1 to 12, **characterised in that** the return force of the gearshift lever (1) is generated by a spring-biased roller which is mounted on the gearshift lever (1) and runs on a stationary curvature of the housing, and the spring bias on the roller reduces towards the non-operating position (11).

11. Gearshift mechanism as claimed in one of the preceding claims, **characterised in that** the displaceable stop (15) at the gearshift lever end can be moved perpendicular to the pivot axis of the gearshift lever (1) by means of a mechanical actuator device (3, 4).

12. Use of a gearshift mechanism as claimed in claim 11 for initiating the parking lock of the automatic transmission by moving the stop (15) at the gearshift lever end perpendicular to the pivot axis of the gearshift lever (1) by means of the mechanical actuator device (3, 4) and then moving another stop (16) at the gearshift lever end towards and into abutment with the other stop (8) at the housing end by moving the gearshift lever (1) along the shift gate.

## Revendications

1. Dispositif de changement de vitesses pour la transmission sans effort d'ordres de changement de vitesses à une boîte de vitesses automatique d'un véhicule automobile, comprenant :
- un boîtier, dans lequel est logé le dispositif de changement de vitesses,
- un levier sélecteur (1) monté de façon oscillante le long d'un couloir de commutation, et
- une première et une deuxième butées de commutation (7, 15; 9, 16) pour le levier sélecteur (1), définissant chacune une position de commutation (12, 13) du levier sélecteur (1), respectivement constituées par
- une butée côté boîtier (7, 9) et
- une butée côté levier sélecteur (15, 16),
- comprenant en outre, pour chaque butée de commutation (7, 15; 9, 16), un dispositif détecteur pour ces deux positions de commutation (12, 13),
- une position de repos (11) étant aménagée entre ces deux positions de commutation (A, B), dans laquelle le levier sélecteur (1) retourne de lui même, depuis une position inclinée de commutation (12, 13), mû par une force de rappel,
**caractérisé en ce que**
- la butée (15) associée à l'une des positions de commutation (12), aménagée sur le levier sélecteur, est reliée à un dispositif d'actionnement mécanique (3, 4) monté sur le levier sélecteur, le dispositif permettant de déplacer la butée (15) perpendiculairement à l'axe de pivot du levier sélecteur (1), de manière telle que le levier sélecteur (1) puisse être déplacé au-delà de cette position de commutation (12), jusqu'en contact avec une autre butée (8) aménagée dans le boîtier, et **en ce que**
- le dispositif détecteur pour ladite au moins une position de commutation du levier sélecteur (1) comprend un capteur Hall, un détecteur optique ou un contacteur électrique.

2. Dispositif de changement de vitesses selon la revendication précédente 1, **caractérisé en ce que** le dispositif d'actionnement comprend une tige de poussée/traction (4) s'étendant à l'intérieur du levier sélecteur (1).

3. Dispositif de changement de vitesses selon la revendication précédente 2, **caractérisé en ce que** la tige de poussée/traction (4) s'étendant à l'intérieur du levier sélecteur (1) comporte un élément de butée (4') aménagé sur le levier sélecteur, à l'extrémité de celui-ci.

4. Dispositif de changement de vitesses selon la revendication précédente 2, **caractérisé en ce que** la tige de poussée/traction (4) s'étendant à l'intérieur du levier sélecteur (1) comporte un tourillon servant de butée côté levier sélecteur.

5. Dispositif de changement de vitesses selon l'une des revendications précédentes 2 ou 4, **caractérisé en ce que** le dispositif d'actionnement comprend un élément ressort (5), qui, à l'état non actionné, repousse la tige de poussée/traction (4) vers une position haute par rapport au levier sélecteur (1).

6. Dispositif de changement de vitesses selon la revendication précédente 5, **caractérisé en ce que** l'élément ressort est un ressort hélicoïdal (5), qui entoure la tige de poussée/traction (4) s'étendant à l'intérieur du levier sélecteur (1) et s'appuie d'un côté sur le levier sélecteur (1) et de l'autre côté sur la tige de poussée/traction (4).

7. Dispositif de changement de vitesses selon l'une des revendications précédentes 2 à 6, **caractérisé en ce que** le dispositif d'actionnement comprend un bouton (3) monté dans un pommeau de changement de vitesses (2) sur le levier sélecteur (1).

8. Dispositif de changement de vitesses selon la revendication précédente 7, **caractérisé en ce que** le bouton (3) est monté de façon coulissante dans le sens longitudinal du levier sélecteur (1).

9. Dispositif de changement de vitesses selon l'une des revendications précédentes 1 à 8, **caractérisé en ce qu'**un détecteur servant à détecter le positionnement du levier sélecteur (1) dans sa position de repos (11) est prévu.

10. Dispositif de changement de vitesses selon l'une des revendications précédentes 1 à 9, **caractérisé en ce que** la force de rappel agissant sur le levier sélecteur (1) est créée par un galet précontraint par un ressort, qui est monté sur le levier sélecteur (1) et évolue sur une came solidaire du boîtier, la précontrainte du ressort, agissant sur le galet, diminuant en direction de la position de repos (11).

11. Dispositif de changement de vitesses selon l'une des revendications précédentes, **caractérisé en ce que** la butée mobile (15) intégrée au levier sélecteur peut être déplacée au moyen d'un dispositif de commande mécanique (3, 4), perpendiculairement à l'axe de pivot du levier sélecteur (1).

12. Utilisation d'un dispositif de changement de vitesses selon la revendication 11 pour engager le verrouillage de stationnement d'une boîte de vitesses automatique, en déplaçant la butée (15) côté levier sélecteur au moyen du dispositif d'actionnement mécanique (3, 4) perpendiculairement à l'axe de pivot du levier sélecteur (1), et en amenant ensuite une autre butée (16) du levier sélecteur jusqu'en contact avec l'autre butée (8) côté boîtier, en déplaçant le levier sélecteur (1) le long du couloir de commutation.
